# EUROPEAN PATENT SPECIFICATION

(11) **EP 2 878 407 B1**
(45) Date of publication and mention of the grant of the patent: **26.09.2018**
(21) Application number: 14192713.7
(22) Date of filing: 11.11.2014
(51) Int. Cl.: B23H 3/06, B23H 9/14, C25D 11/02

(54) **Process for fabricating a tool used in electrochemical maching and tool made by the process**
Verfahren zur Herstellung eines Werkzeugs zur Verwendung in elektrochemischem Abtragen und mit diesem Verfahren hergestelltes Werkzeug
Procédé de fabrication d'un outil utilisé dans l'usinage électrochimique et outil fabriqué par le procédé

(30) Priority: 27.11.2013 CN 201310613240
(43) Date of publication of application: 03.06.2015
(73) Proprietor: General Electric Company, Schenectady, NY 12345 (US)
(72) Inventor: Xu, Huiyu, 201203 Shanghai (CN); Wu, Yingna, 201203 Shanghai (CN); Wei, Bin, 201203 Shanghai (CN)
(74) Representative: Foster, Christopher Michael

(56) References cited:
- DE-A1- 19 854 793
- US-A- 3 276 987
- US-A1- 2011 070 096
- US-B1- 6 303 193
- VANGOLU Y ET AL: "Optimization of the coating parameters for micro-arc oxidation of Cp-Ti", SURFACE AND COATINGS TECHNOLOGY, ELSEVIER, AMSTERDAM, NL, vol. 205, no. 6, 15 December 2010 (2010-12-15), pages 1764-1773, XP027509875, ISSN: 0257-8972, DOI: 10.1016/J.SURFCOAT.2010.08.042 [retrieved on 2010-08-20]
- JIN WANG ET AL: "A new electrode sidewall insulation method in electrochemical drilling", THE INTERNATIONAL JOURNAL OF ADVANCED MANUFACTURING TECHNOLOGY, vol. 75, no. 1-4, 10 October 2014 (2014-10-10), pages 21-32, XP055195157, ISSN: 0268-3768, DOI: 10.1007/s00170-014-6131-x

## Description

### BACKGROUND

Electrochemical machining involves using electrochemical force rather than mechanical force to remove material from a workpiece, and is a widely used to produce holes in difficult-to-machine conductive parts. As an adaptation of electrochemical machining, shaped-tube electrolytic machining (STEM) drilling is a noncontact electrochemical-drilling process, where material is removed by a hollow electrode (tube electrode) applied with a voltage. STEM drilling is able to produce holes with high aspect ratios. Owing to its ability to drill small, deep holes in electrically conductive workpieces, STEM drilling is used to produce cooling air holes in turbine blades, buckets and vanes.

In general STEM drilling process, a resin-type or polymer-type coating is provided on the lateral surface of the tube electrode to provide electrical insulation and better anti-corrosive performance. The front face of the tube electrode exposing to the electrolyte plays the role of cathode tooling. During STEM drilling, the hydrogen produced in the electrochemical reaction at a front tip area of tube electrode will degrade the bond strength of the coating and cause adhesive failure, which happens more quickly with the cathode materials that oxidize in the presence of hydrogen. With the combined effect of the bond strength degradation due to the strong electrolyte flushing at the front tip area and the scrap of coating which frequently occurs around the front tip area where the tube electrode interacts with the internal side wall of the hole that is made during STEM drilling, the coating is easily peeled at the tube tip area, even peeled off from the tube surface when the tube electrode is used to drill deep holes. The scrap and peeling, which are not easy to detect, may make the process unstable, the hole quality unacceptable, or even may cause unwanted tube bending and failed drilling. Therefore a qualified STEM electrode with anti-peeling coating is needed to solve this problem.

Document DE 198 54 793 A1 discloses a tube-shaped ECM-electrode with a thermally sprayed ceramic coating and an intermediate layer as a bond coat for improving the bonding of the coating. Document US 2001/070096 A1 describes a curved electrode for an electrochemical machining process. The electrically conductive member is coated with an insulating material, for example polyethylene, polytetrafluoro-ethylene, ceramics or various types of rubber, covering at least a portion of the side surface of the curved electrically conductive member.

### BRIEF DESCRIPTION

In one aspect, the present disclosure relates to a process for making a tube electrode for shaped-tube electrochemical machining. In the process, an electrically conductive tube is provided, and an electrically insulating layer is coated on a peripheral surface of the tube, during which a ceramic layer is coated on at least a tip adjacent area of the peripheral surface of the tube by micro arc oxidation. In another aspect, the present disclosure relates to a tube electrode for shaped-tube electrochemical machining. The tube electrode includes an electrically conductive tube, and an electrically insulating layer coated on a peripheral surface of the tube. The electrically insulating layer comprises a ceramic layer formed by micro arc oxidation on at least a tip adjacent area of the peripheral surface of the tube.

### BRIEF DESCRIPTION OF THE DRAWINGS

The above and other aspects, features, and advantages of the present disclosure will become more apparent in light of the subsequent detailed description when taken in conjunction with the accompanying drawing in which:
FIG. 1 is a schematic view showing an exemplary shaped-tube electrochemical machining (STEM) drilling system that is being used to drill small and deep holes in a workpiece.
FIG. 2 is a schematic view showing a tip adjacent portion of an exemplary tube electrode for STEM drilling.
FIG. 3 is a cross sectional view of an exemplary tube electrode for STEM drilling.

### DETAILED DESCRIPTION

Unless defined otherwise, technical and scientific terms used herein have the same meaning as is commonly understood by one of ordinary skill in the art to which this invention belongs. The terms "a" and "an" do not denote a limitation of quantity, but rather denote the presence of at least one of the referenced items. Moreover, the terms "coupled" and "connected" are not intended to distinguish between a direct or indirect coupling/connection between two components. Rather, such components may be directly or indirectly coupled/connected unless otherwise indicated.

Approximating language, as used herein throughout the specification and claims, may be applied to modify any quantitative representation that could permissibly vary without resulting in a change in the basic function to which it is related. Accordingly, a value modified by a term or terms, such as "about," is not to be limited to the precise value specified. In certain embodiments, the term "about" means plus or minus ten percent (10%) of a value. For example, "about 100" would refer to any number between 90 and 110. Additionally, when using an expression of "about a first value - a second value," the about is intended to modify both values. In some instances, the approximating language may correspond to the precision of an instrument for measuring the value or values.

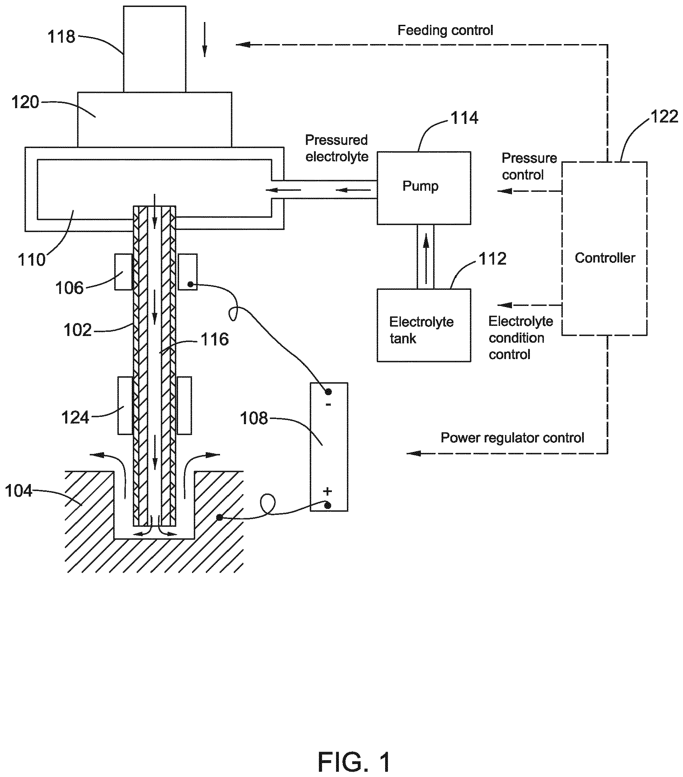

Embodiments of the present disclosure refer to shaped-tube electrochemical machining (STEM) drilling, STEM drilling tools, and processes for making STEM drilling tools. Referring to FIG. 1, in an exemplary STEM drilling process, a tube electrode 102 is used to drill small and deep holes in a workpiece 104. The tube electrode 102 is held by a clamping device 106, which may also serve as a power connector coupled to a cathode of a power supply 108. An anode of the power supply 108 is coupled to the workpiece 104. The tube electrode 102 is long and has two longitudinal ends, a tip end interacting with the workpiece 104 that is being drilled and an opposite end coupled to an electrolyte manifold 110. The electrolyte manifold 110 is connected to an electrolyte tank 112 via a pump 114, such that pressured electrolyte can be provided to the electrolyte manifold 110 from electrolyte tank 112 through the pump 114. There is an electrolyte passage 116 in the tube electrode 102 for allowing an electrolyte to flow from the electrolyte manifold 110 to the tip end of the tube electrode that interacts with the workpiece 104. A driving device 118 is used to drive the tube electrode 102 to move. There may be a ram 120 between the driving device 118 and electrolyte manifold 110 that is connected to the tube electrode 102, in order to realize the rigid connection between driving device 118 and tube electrode 102 so that the electrode can be fed precisely by driving device 118. A controller 122 is used to control the STEM drilling process. The controller 122 provides feeding control to the driving device 118, pressure and electrolyte condition control to the pump 114 and electrolyte tank 112, and power regulator control to the power supply 108. In order to prevent the long tube electrode 102 from deviation during STEM drilling, there may be a detachable guide bush 124 set between the workpiece 104 and the clamping device 106 to guide the movement of the tube electrode 102.

In some embodiments of the present disclosure, the tube electrode 102 is up to 1000 mm long, or even longer, and it may has a diameter smaller than 2 mm, for example, of about 1.6 mm or even smaller. Therefore the tube electrode 102 is capable of making and achieving holes with an aspect ratio up to 300:1 or even larger.

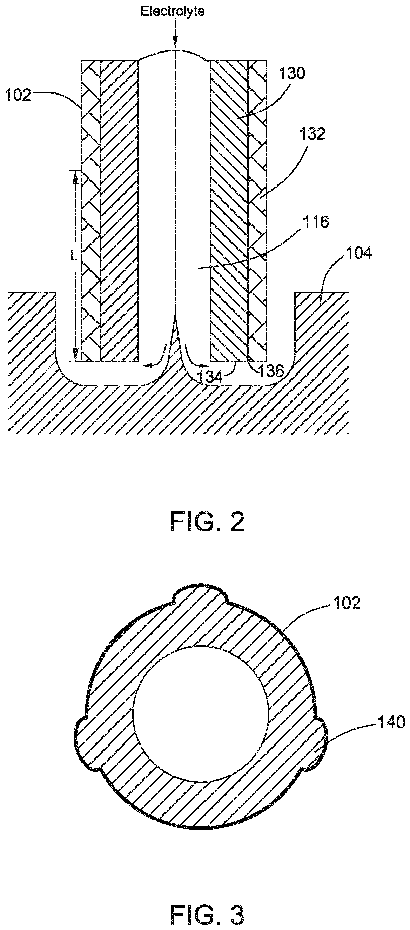

Referring to FIG. 2, typically, the tube electrode 102 is an electrically conductive tube 130 coated with an electrically insulating layer 132 on its peripheral surface. During STEM drilling, the electrolyte flowing out of the electrolyte passage 116 scours the exposed tip end surface 134 of the tube electrode 102 where is not coated with the electrically insulating layer, and a joint 136 between the electrically insulating layer and a substrate of the tube electrode on the tip end surface.

In embodiments of the present disclosure, a ceramic layer of tens of micron thickness is provided as the electrically insulating layer of the tube electrode. The thickness of the ceramic layer may be larger than 10 microns, or preferably larger than 30 microns, or more preferably larger than 50 microns. The ceramic layer is prepared so as to provide not only good electrical insulation and reliable anti-corrosive performance, but also good adhesion to the substrate, hard and smooth surface quality, which can guarantee the ceramic layer at a tip portion of the electrode survive during the strong flushing of electrolyte and frequent scrap between the electrode and an inside wall of the hole is being made, and prevent from being peeled off a substrate of the tube electrode.

The ceramic layer is prepared by micro arc oxidation (MAO) method. The MAO is a cost-effective fabrication process. The ceramic layers prepared by MAO are hard, compact coating layers with excellent anti-chemical corrosive quality and low porosity, and are able to provide the STEM electrode with excellent anti-scrap performance during a deep-hole STEM process which usually last several hours to complete one drill.

In one aspect of the present disclosure, a method/process is provided for making a tube electrode used in STEM drilling. To form the tube electrode, an electrically conductive tube is provided and then an electrically insulating layer is coated on a peripheral surface of the tube, during which a ceramic layer is coated on at least a tip adjacent area of the peripheral surface of the tube by MAO

The electrically conductive tube may be made from various electrically conductive materials, such as metals that can be used to fabricate the STEM electrode, including but not limited to titanium (Ti), copper (Cu) and stainless steel. The tube may be thin and long enough to produce in electrically conductive materials small and deep holes with aspect ratios higher than 100:1 or even higher than 300:1.

The peripheral surface of the tube refers to a circumferential outer surface of the tube. A tip adjacent area of the peripheral surface is a section of the peripheral surface that is adjacent to a tip of the tube and has a certain length (L, as indicated in FIG. 2) along a flow direction of an electrolyte to be fed in the tube, starting from the tip of the tube. The length L may be 0.5-10%, or preferably 0.5-5%, or more preferably 0.5-3% of the overall length of the tube. In some embodiments, the length L ranges from about 5 mm to about 100 mm, or preferably from about 5 mm to 50 mm, or more preferably from about 5 mm to 30 mm.

In order to prevent a tip of the thin and long STEM electrode from shaking in the deep hole that is being made, a stabilizer may be provided on the peripheral surface of the tube. The stabilizer may be a portion protruding out of the peripheral surface of the tube, and preferably, protruding out of the tip adjacent area of the peripheral surface of the tube. In specific embodiments, the stabilizer may be a ring-like protuberance or include one or more bumps. For example, as illustrated in FIG. 3, the stabilizer includes nodule-like bumps 140 protruding out of the tip adjacent area of the peripheral surface of the tube. There is no limit to the number of the nodule-like bumps, and the tube may have two or more such bumps, depending on the actual needs. For example, there may be two nodule-like bumps protruding from two opposite sides on the tip adjacent area of the peripheral surface of the tube, or there may be a plurality of nodule-like bumps arranged in a circumferential circle on the tip adjacent area of the peripheral surface of the tube. The stabilizer such as the nodule-like bumps partially fill a space between the STEM electrode and a side wall of the hole that the STEM electrode is making, and thereby reduce the tip shaking of the STEM electrode. In some embodiments, the stabilizer has a height ranging from about 0.1 mm to about 0.5 mm, or preferably from about 0.1 mm to about 0.3 mm protruding out of the peripheral surface of the tube.

In some specific embodiments, a ceramic layer is coated on at least a tip adjacent area of the peripheral surface of the tube by MAO. In some implementations, the ceramic layer is coated on the whole peripheral surface of the tube. In some other implementations, the ceramic layer is coated on a tip adjacent area of the peripheral surface of the tube, and a resin layer or polymer layer is coated on the rest of the peripheral surface of the tube.

In the MAO process, the metal substrate (the electrically conductive tube) is placed in aqueous electrolytic bath under pulsed electric fields, where spark discharge occurs on the surface of the substrate due to the terminal voltage applied. The spark discharge results a high temperature which makes metal atoms of the substrate combine with the activated oxygen ions in the electrolytic solution to produce a coating layer with ceramic structure and characteristics. The layer has excellent mechanical properties including but not limited to wear resistance and toughness, and strongly adhesion to the metal substrate surface.

The ceramic layer prepared by the MAO process as mentioned above is hard and much more durable in the STEM drilling process than general layer such as the resin layer, which makes the tube electrode more durable with higher flushing pressure at the tip area thereof during the STEM drilling process without peeling. The higher-pressure STEM drilling may be useful for drilling deeper holes, such as the cooling holes that may be needed for the larger bucket in the future. Moreover, as MAO is a low cost coating process, the total cost of the tube electrode can be reduced by using this process to make coating layers for the tube electrode.

In another aspect, embodiments of the present disclosure refer to a tube electrode used in STEM drilling for deep holemaking. The tube electrode has an electrically insulating layer on a peripheral surface of the tube, which includes a ceramic layer provided through micro arc oxidation.

As described above, the tip adjacent area of the peripheral surface is a section of the peripheral surface that is adjacent to a tip of the tube and has a certain length along a flow direction of an electrolyte to be fed in the tube, starting from the tip of the tube. The tube may have a stabilizer on the tip adjacent area of the peripheral surface, and the stabilizer may have a certain height protruding out of the peripheral surface of the tube. Thereby, after the tube is coated to form the coated tube electrode, there will be according stabilizer protruding out of the peripheral surface of the tube electrode.

In some specific embodiments, the electrically insulating layer includes a ceramic layer formed by micro arc oxidation on at least a tip adjacent area of the peripheral surface of the tube. In some implementations, the electrically insulating layer includes a ceramic layer formed by micro arc oxidation on the whole peripheral surface of the tube. In some implementations, the electrically insulating layer includes a ceramic layer formed by micro arc oxidation on the tip adjacent area of the peripheral surface of the tube, and a resin layer or polymer layer on the rest of the peripheral surface of the tube.

## Claims

1. A process for making a tube electrode (102) for shaped-tube electrochemical machining (STEM), comprising:
providing an electrically conductive tube (130); and
coating an electrically insulating layer (132) on a peripheral surface of the tube,
**characterized in that** said coating comprises
coating a ceramic layer on at least a tip adjacent area of the peripheral surface of the tube (130) by micro arc oxidation.

2. The process according to claim 1, wherein said coating comprises coating a ceramic layer on a tip adjacent area of the peripheral surface of the tube (130) by micro arc oxidation.

3. The process according to claim 2, wherein the ceramic layer covers the whole peripheral surface of the tube (130).

4. The process according to claim 2, further comprising coating a resin-type or polymer-type layer on the rest of the peripheral surface of the tube (130).

5. The process according to claim 1, wherein the tube comprises a stabilizer protruding out of the tip adjacent area of the peripheral surface thereof.

6. The process according to claim5, wherein the stabilizer comprises nodule-like bumps (140) having a height ranging from about 0.1 mm to about 0.5 mm.

7. The process according to claim 1, wherein the tip adjacent area of the peripheral surface is a section of the peripheral surface that is adjacent to a tip of the tube and has a length (L) along a flow direction of an electrolyte to be fed in the tube, ranging from about 5 mm to about 100 mm starting from the tip of the tube.

8. A tube electrode (102) for shaped-tube electrochemical machining (STEM), comprising:
an electrically conductive tube (130); and
an electrically insulating layer (132) coated on a peripheral surface of the tube (130),
**characterized in that** said electrically insulating layer (130) comprises a ceramic layer, formed by micro arc oxidation, on at least a tip adjacent area of the peripheral surface of the tube (130).

9. The tube electrode (102) according to claim 8, wherein the electrically insulating layer (132) comprises a ceramic layer formed by micro arc oxidation on a tip adjacent area of the peripheral surface of the tube (130) and wherein the ceramic layer covers the whole peripheral surface of the tube (130) or wherein the electrically insulating layer (132) further comprises a resin layer or polymer layer on the rest of the peripheral surface of the tube (130).

10. The tube electrode (102) according to any one of claims 8 to 9, wherein the tube comprises a stabilizer protruding out of the tip adjacent area of the peripheral surface thereof.

11. The tube electrode (102) according to claim 10, wherein the stabilizer comprises nodule-like bumps (140) having a height ranging from about 0.1 mm to about 0.5 mm.

12. The tube electrode (102) according to any one of claims 8 to 11, wherein the tip adjacent area of the peripheral surface is a section of the peripheral surface that is adjacent to a tip of the tube and has a length along a flow direction of an electrolyte to be fed in the tube, ranging from about 5 mm to about 100 mm starting from the tip of the tube.

## Patentansprüche

1. Ein Prozess zum Fertigen einer Röhrenelektrode (102) für STEM (Shaped-Tube Electrochemical Machining), umfassend:
Bereitstellen einer elektrisch leitfähigen Röhre (130); und
Auftragen einer elektrisch isolierenden Schicht (132) auf eine periphere Oberfläche der Röhre,
**dadurch gekennzeichnet, dass** das Auftragen umfasst:
Auftragen einer keramischen Schicht auf wenigstens einen Spitzennachbarbereich der peripheren Oberfläche der Röhre (130) durch Mikrolichtbogenoxidation.

2. Der Prozess nach Anspruch 1, wobei das Auftragen Auftragen einer keramischen Schicht auf einen Spitzennachbarbereich der peripheren Oberfläche der Röhre (130) durch Mikrolichtbogenoxidation umfasst.

3. Der Prozess nach Anspruch 2, wobei die keramische Schicht die gesamte periphere Oberfläche der Röhre (130) bedeckt.

4. Der Prozess nach Anspruch 2, der ferner Auftragen einer Schicht eines Harztyps oder eines Polymertyps auf den Rest der peripheren Oberfläche der Röhre (130) umfasst.

5. Der Prozess nach Anspruch 1, wobei die Röhre einen Stabilisator umfasst, der aus dem Spitzennachbarbereich der peripheren Oberfläche davon herausragt.

6. Der Prozess nach Anspruch 5, wobei der Stabilisator knollenartige Höcker (140) mit einer Höhe im Bereich von etwa 0,1 mm bis etwa 0,5 mm umfasst.

7. Der Prozess nach Anspruch 1, wobei der Spitzennachbarbereich der peripheren Oberfläche ein Abschnitt der peripheren Oberfläche ist, der an eine Spitze der Röhre angrenzt und eine Länge (L) entlang einer Flussrichtung eines Elektrolyten, der in die Röhre einzuführen ist, im Bereich von etwa 5 mm bis etwa 100 mm beginnend von der Spitze der Röhre aufweist.

8. Eine Röhrenelektrode (102) für STEM (Shaped-Tube Electrochemical Machining), umfassend:
eine elektrisch leitfähige Röhre (130); und
eine elektrisch isolierende Schicht (132), die auf eine periphere Oberfläche der Röhre (130) aufgebracht ist,
**dadurch gekennzeichnet, dass** die elektrisch isolierende Schicht (130) eine keramische Schicht umfasst, die durch Mikrolichtbogenoxidation auf wenigstens einem Spitzennachbarbereich der peripheren Oberfläche der Röhre (130) gebildet ist.

9. Die Röhrenelektrode (102) nach Anspruch 8, wobei die elektrisch isolierende Schicht (132) eine keramische Schicht umfasst, die durch Mikrolichtbogenoxidation auf einem Spitzennachbarbereich der peripheren Oberfläche der Röhre (130) gebildet ist und wobei die keramische Schicht die gesamte periphere Oberfläche der Röhre (130) bedeckt oder wobei die elektrisch isolierende Schicht (132) ferner eine Harzschicht oder eine Polymerschicht auf dem Rest der peripheren Oberfläche der Röhre (130) umfasst.

10. Die Röhrenelektrode (102) nach einem der Ansprüche 8 bis 9, wobei die Röhre einen Stabilisator umfasst, der aus dem Spitzennachbarbereich der peripheren Oberfläche davon herausragt.

11. Die Röhrenelektrode (102) nach Anspruch 10, wobei der Stabilisator säulenartige Höcker (140) mit einer Höhe im Bereich von etwa 0,1 mm bis etwa 0,5 mm umfasst.

12. Die Röhrenelektrode (102) nach einem der Ansprüche 8 bis 11, wobei der Spitzennachbarbereich der peripheren Oberfläche ein Abschnitt der peripheren Oberfläche ist, der an eine Spitze der Röhre angrenzt und eine Länge entlang einer Flussrichtung eines Elektrolyten, der in die Röhre einzuführen ist, im Bereich von etwa 5 mm bis etwa 100 mm beginnend von der Spitze der Röhre aufweist.

## Revendications

1. Procédé pour fabriquer une électrode tubulaire (102) pour un usinage électrochimique de tube formé (STEM) consistant :
à fournir un tube électroconducteur (130) ; et
à recouvrir une couche électro-isolante (132) sur une surface périphérique du tube,
**caractérisé en ce que** ledit revêtement consiste
à recouvrir une couche céramique sur au moins une zone adjacente à une extrémité de la surface périphérique du tube (130) par une oxydation micro-arc.

2. Procédé selon la revendication 1, dans lequel ledit revêtement consiste à recouvrir une couche céramique sur une zone adjacente à une extrémité de la surface périphérique du tube (130) par une oxydation micro-arc.

3. Procédé selon la revendication 2, dans lequel la couche céramique recouvre toute la surface périphérique du tube (130).

4. Procédé selon la revendication 2, consistant en outre à recouvrir une couche de type résine ou de type polymère sur le reste de la surface périphérique du tube (130) .

5. Procédé selon la revendication 1, dans lequel le tube comprend un stabilisateur faisant saillie depuis la zone adjacente à une extrémité de la surface périphérique de ce dernier.

6. Procédé selon la revendication 5, dans lequel le stabilisateur comporte des bosses semblables à des nodules (140) ayant une hauteur variant entre environ 0,1 mm et environ 0,5 mm.

7. Procédé selon la revendication 1, dans lequel la zone adjacente à une extrémité de la surface périphérique est une section de la surface périphérique qui est adjacente à une extrémité du tube et présente une longueur (L) dans une direction d'écoulement d'un électrolyte qui doit être fourni dans le tube, variant entre environ 5 mm et environ 100 mm en partant depuis l'extrémité du tube.

8. Électrode tubulaire (102) pour un usinage électrochimique de tube formé (STEM) comprenant :
un tube électroconducteur (130) ; et
une couche électro-isolante (132) revêtue sur une surface périphérique du tube (130),
**caractérisé en ce que** ladite couche électro-isolante (130) comprend une couche céramique, formée par une oxydation micro-arc, sur au moins une zone adjacente à une extrémité de la surface périphérique du tube (130).

9. Électrode tubulaire (102) selon la revendication 8, dans laquelle la couche électro-isolante (132) comprend une couche céramique formée par une oxydation micro-arc sur une zone adjacente à une extrémité de la surface périphérique du tube (130) et dans laquelle la couche céramique recouvre toute la surface périphérique du tube (130) ou dans laquelle la couche électro-isolante (132) comprend en outre une couche de résine ou une couche de polymère sur le reste de la surface périphérique du tube (130) .

10. Électrode tubulaire (102) selon l'une quelconque des revendications 8 à 9, dans laquelle le tube comprend un stabilisateur faisant saillie depuis la zone adjacente à une extrémité de la surface périphérique de ce dernier.

11. Électrode tubulaire (102) selon la revendication 10, dans laquelle le stabilisateur comporte des bosses semblables à des nodules (140) ayant une hauteur variant entre environ 0,1 mm et environ 0,5 mm.

12. Électrode tubulaire (102) selon l'une quelconque des revendications 8 à 11, dans laquelle la zone adjacente à une extrémité de la surface périphérique est une section de la surface périphérique qui est adjacente à une extrémité du tube et présente une longueur dans une direction d'écoulement d'un électrolyte qui doit être fourni dans le tube, variant entre environ 5 mm et environ 100 mm en partant depuis l'extrémité du tube.
